# EUROPEAN PATENT APPLICATION

(11) **EP 4 661 087 A1**
(43) Date of publication of application: **10.12.2025**
(21) Application number: 24767318.9
(22) Date of filing: 23.02.2024
(51) Int. Cl.: H01M 4/04, B05C 1/08, B65H 27/00

(54) **ELECTRODE MATERIAL COATING BACK ROLL HAVING INFLOW AIR DISCHARGE FUNCTION**

(30) Priority: 03.03.2023 KR 20230028799
(71) Applicant: People & Technology Inc., Gyeongsangbuk-do 39422 (KR)
(72) Inventor: KIM, Joonsup, Gumi-si Gyeongsangbuk-do 39422 (KR); YONG, Hyunho, Gumi-si Gyeongsangbuk-do 39353 (KR); CHUNG, Hyun Soo, Chilgok-gun Gyeongsangbuk-do 39843 (KR); JO, Sung Man, Gumi-si Gyeongsangbuk-do 39421 (KR)
(74) Representative: BCKIP Part mbB
(86) International application number: PCT/KR2024/002402
(87) International publication number: WO 2024/186029

(57) **Abstract**

The present invention relates to an electrode material coating back roll having an inflow air discharge function. The present invention, which is arranged in correspondence to an active material coating device for manufacturing a secondary battery and supports a current collector fabric while the coating device coats the current collector fabric with an active material, comprises: a close contact surface portion in close contact with the current collector fabric; and an exhaust induction portion which is integrated with the close contact surface portion, and which discharges air flowing between the back roll and the current collector fabric to the outside so as to prevent the current collector fabric from becoming delaminated by inflow air. The electrode material coating back roll having an inflow air discharge function, of the present invention, can immediately discharge incoming air even if air flows between the back roll and the current collector fabric, and thus delamination of the current collector fabric from the back roll is prevented so that a wrinkle-free electrode material layer with uniform thickness can be applied.

## Description

### [Technical Field]

The present invention relates to an electrode material coating device for secondary batteries, and more particularly to an electrode material coating back roll having an inflow air discharge function capable of preventing delamination of a current collector fabric from the back roll, thereby avoiding the occurrence of wrinkles in the current collector fabric and an electrode material layer and coating defects.

### [Background Art]

A secondary battery, which is a battery capable of being repeatedly charged and discharged, has a structure in which ions in an electrolyte move between a positive electrode and a negative electrode isolated from each other by a separator, whereby charging and discharging are repeated.

In the secondary battery, an electrode, i.e., each of the positive electrode and the negative electrode, has a structure in which a current collector and an electrode material layer are laminated. The current collector is a sheet or foil made of aluminum or copper. The electrode material layer is a laminate formed by applying and curing an active material in a slurry form to the current collector. The active material, after drying and curing, forms the electrode material layer.

Such an electrode for secondary batteries is produced through a process of applying an active material to a current collector fabric continuously supplied in a roll-to-roll manner and drying and curing the active material. A coating device for laminating the active material on the current collector fabric includes a back roll and a slot die. The slot die is a device that horizontally installed above the current collector fabric and extrudes the active material to an upper surface of the fabric to laminate the active material on the fabric, and the back roll serves to support the current collector fabric from under the slot die. Without the back roll, the current collector fabric may sag downward, resulting in poor coating of the electrode active material.

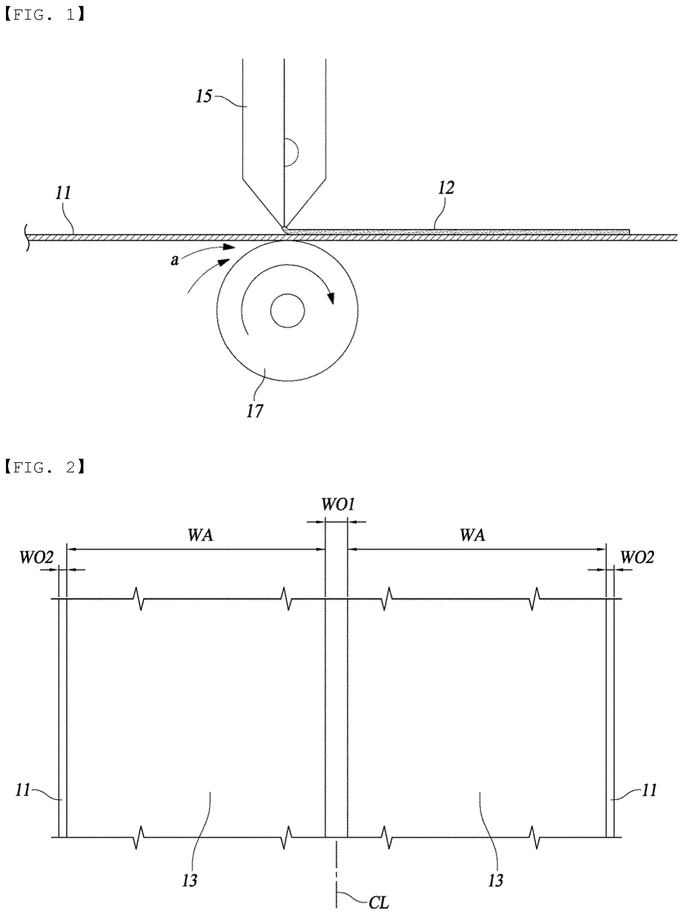

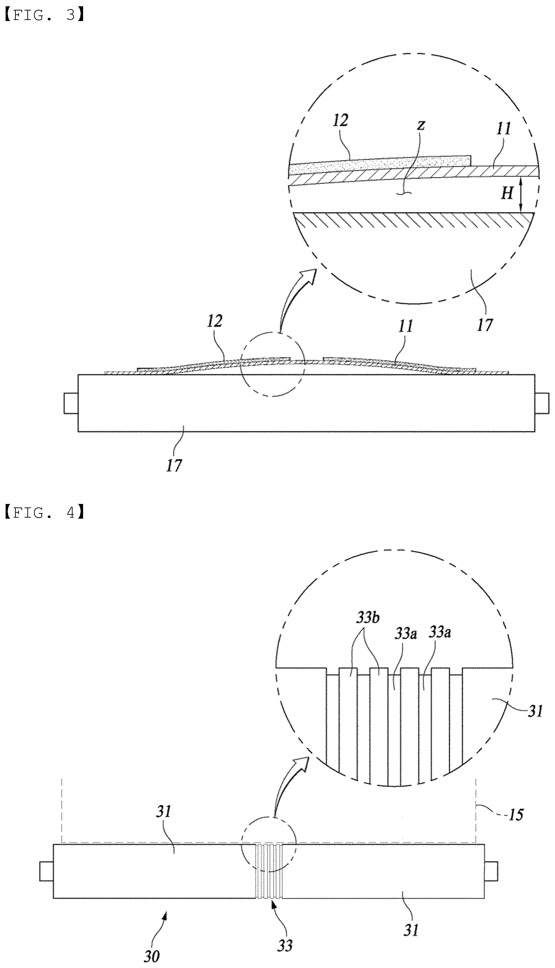

FIG. 1 is a side view showing that a current collector fabric 11 is coated with an active material using a conventional back roll, and FIG. 2 is a plan view showing that an electrode material layer 13 is laminated on the current collector fabric. In addition, FIG. 3 is a view illustrating problems of an electrode layer coating device shown in FIG. 1.

As shown, while the current collector fabric 11 passes between an active material coating device 15 and a back roll 17, an active material 12 supplied from the active material coating device 15 is applied to an upper surface of the current collector fabric 11. The applied active material 12 is dried and cured to form an electrode material layer 13. The back roll 17 is disposed so as to correspond to the active material coating device 15 and serves to support the current collector fabric 11. The surface of the back roll is smooth.

For reference, the electrode material layer 13 formed on the current collector fabric 11 is not formed on both ends and a central part of the current collector fabric 11 in a lateral direction, rather than being formed over the entire surface of the current collector fabric 11, as shown in FIG. 2. That is, on the assumption that a part of the current collector fabric 11 where the electrode material layer 13 is formed is referred to as a "coated portion WA", and parts of the current collector fabric 11 where the electrode material layer 13 is not laminated are referred to as "uncoated portions WO1 and WO2", the uncoated portions are formed on the central part and both ends and of the current collector fabric 11 in the lateral direction. The width of the coated portion varies depending on the size of a secondary battery to be manufactured.

However, the conventional active material coating device has the problem that a delamination space Z is generated between the back roll 17 and the current collector fabric 11 during operation thereof, as shown in FIG. 3. The delamination space Z is formed as external air is drawn between the back roll 17 rotating at a high speed and the current collector fabric 11 in a direction indicated by arrow a. This phenomenon is caused by friction between the air and the current collector fabric 11 and between the air and the back roll 17. (In FIG. 2, the delamination space Z is exaggerated for the sake of convenience. The maximum height H of the delamination space varies depending on various factors, and the delamination space is frequently generated.)

The delamination space Z separates the current collector fabric 11 from the back roll 17, thereby interfering with accurate application of the active material 12. If the active material is applied in the state in which the current collector fabric 11 is delaminated, the thickness of the electrode material layer is uneven, and unsightly wrinkles are generated. In addition, wrinkles are also generated on the current collector fabric.

A structure capable of immediately exhausting the introduced air to prevent the occurrence of the delamination space is required even if it is impossible to completely prevent air from entering between the current collector fabric 11 and the back roll 17.

As the background art related to electrode material application, Korean Patent Application Publication No. 10-2021-0069485 (ELECTRODE ACTIVE MATERIAL APPLICATION DEVICE FOR SECONDARY BATTERIES) has been disclosed.

### [Disclosure]

### [Technical Problem]

The present invention has been made in view of the above problems, and it is an object of the present invention to provide an electrode material coating back roll having an inflow air discharge function capable of preventing delamination of a current collector fabric from the back roll, enabling coating of an electrode material layer with no wrinkles and uniform thickness.

### [Technical Solution]

As a solving means for achieving the above object, an electrode material coating back roll having an inflow air discharge function according to an embodiment of the present invention, which is disposed so as to correspond to an active material coating device for manufacturing secondary batteries and is configured to support a current collector fabric while the coating device coats the current collector fabric with an active material, includes a close contact surface portion in close contact with the current collector fabric and an exhaust guide portion integrated with the close contact surface portion, the exhaust guide portion being configured to discharge air introduced between the back roll and the current collector fabric to the outside, thereby preventing delamination of the current collector fabric from the back roll due to the introduced air.

In addition, the current collector fabric may include a coated portion where the active material is coated and an uncoated portion where the active material is not coated, and
the exhaust guide portion may be located so as to correspond to the uncoated portion.

In addition, the exhaust guide portion may include an annular groove having a certain width and depth, the annular groove extending in a circumferential direction of the back roll, the annular groove being configured to guide the introduced air in the circumferential direction.

The annular groove may be provided in plural so as to be parallel to each other, and a depression prevention portion may be provided between the annular grooves, the depression prevention portion having the same diameter as the close contact surface portion, the depression prevention portion being in contact with the current collector fabric, the depression prevention portion being configured to prevent the current collector fabric from entering the annular grooves.

Furthermore, the exhaust guide portion may include a plurality of tangential recesses formed parallel to a tangential direction of the back roll, the tangential recesses being configured to guide and exhaust the introduced air in the tangential direction.

In addition, the tangential recesses may be spaced apart from each other in a rotational axis direction and the circumferential direction of the back roll, and a depression prevention portion may be formed between the tangential recesses, the depression prevention portion being in contact with the current collector fabric, the depression prevention portion being configured to prevent the current collector fabric from entering the tangential recesses.

As a solving means for achieving the above object, an electrode material coating back roll having an inflow air discharge function according to another embodiment of the present invention, which is disposed so as to correspond to an active material coating device for manufacturing secondary batteries and is configured to support a current collector fabric while the coating device coats the current collector fabric with an active material, includes a roll core provided in an outer circumferential surface thereof with an air guide groove, the roll core having a certain diameter, and a porous cylinder formed as a cylindrical member of a certain diameter configured to receive the roll core, the porous cylinder being in close contact with the current collector fabric, the porous cylinder having a plurality of fine holes configured to allow air introduced between the current collector fabric and the back roll to pass therethrough and to guide the air to the air guide groove.

In addition, the roll core may be provided on an outer circumferential surface thereof with a plurality of cylinder close contact portions extending in a circumferential direction of the roll core, the cylinder close contact portions being fixed to an inner circumferential surface of the porous cylinder in close contact therewith, the air guide groove may be a space provided between the cylinder close contact portions, and the fine holes may be disposed so as to correspond to the air guide groove.

### [Advantageous Effects]

As is apparent from the above description, in an electrode material coating back roll having an inflow air discharge function according to the present invention, even when air is introduced between the back roll and a current collector fabric, the introduced air is immediately discharged, thereby preventing delamination of the current collector fabric from the back roll, and therefore it is possible to form an electrode material layer with no wrinkles and uniform thickness by coating.

### [Description of Drawings]

FIG. 1 is a side view showing that a current collector fabric is coated with an active material using a conventional back roll;
FIG. 2 is a plan view showing that an electrode material layer is laminated on the current collector fabric;
FIG. 3 is a view illustrating problems of an electrode layer coating device shown in FIG. 1;
FIG. 4 is a front view of an electrode material coating back roll according to a first embodiment of the present invention;
FIG. 5 is a view illustrating the operation of the back roll shown in FIG. 4;
FIG. 6 is a front view showing a modification of the electrode material coating back roll according to the first embodiment of the present invention;
FIG. 7 is a front view showing a modification of the electrode material coating back roll according to the first embodiment of the present invention;
FIG. 8 is a view showing coating of an active material using the back roll of FIG. 7;
FIG. 9 is a perspective view of an electrode material coating back roll according to a second embodiment of the present invention;
FIG. 10 is an exploded perspective view of the back roll of FIG. 9; and
FIG. 11 is a side sectional view illustrating the function of the back roll shown in FIG. 9.

### [Best Mode]

Hereinafter, an embodiment of the present invention will be described in more detail with reference to the accompanying drawings.

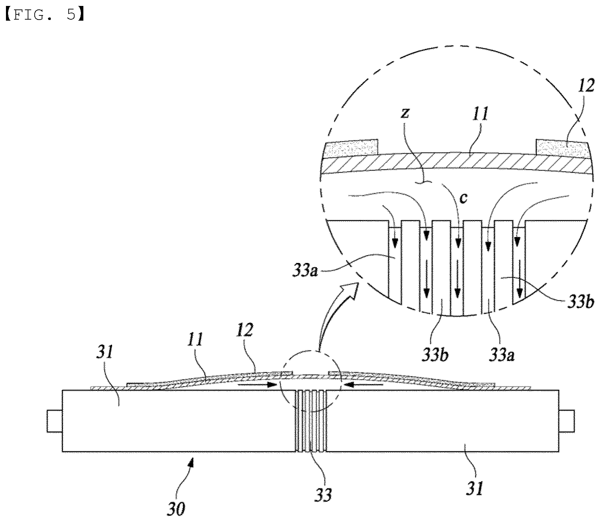

FIG. 4 is a front view of an electrode material coating back roll 30 according to a first embodiment of the present invention, and FIG. 5 is a view illustrating the operation of the back roll shown in FIG. 4.

As shown, the electrode material coating back roll 30, having an inflow air discharge function, according to the first embodiment includes a close contact surface portion 31 and an exhaust guide portion 33. The back roll 30 has a certain diameter and length and is disposed so as to correspond to an active material coating device 15. The active material coating device 15 is a slot die for applying an active material to a current collector fabric 11. The back roll 30 axially rotates in parallel to an active material outlet of the active material coating device 15 and supports the current collector fabric 11.

The current collector fabric 11 passes through the active material coating device 15 while being supported by the back roll 30. A coated portion and an uncoated portion are formed on the current collector fabric 11 by the active material coating device 15. As described above, the coated portion is a part where the active material is laminated, and the uncoated portion is a part where the active material is not laminated. As described above, a laminate is formed after the active material is dried.

The close contact surface portion 31 is a part having a certain diameter, and supports the current collector fabric 11 while the coating device 15 coats the current collector fabric with the active material. The close contact surface portion 31 supports a part to be used as the coated portion. That is, the active material is applied to a part supported by the close contact surface portion 31.

The exhaust guide portion 33 supports a part where the active material is not applied. In other words, the active material is not applied to a part supported by the exhaust guide portion 33. The exhaust guide portion 33 is located so as to correspond to the uncoated portion, and is integrated with the close contact surface portion 31 at a central portion of the back roll 30.

In addition, the exhaust guide portion 33 discharges air introduced between the current collector fabric and the back roll to the outside, preventing delamination of the current collector fabric from the back roll due to the introduced air. In other words, the air drawn in the direction indicated by arrow a in FIG. 1 is immediately discharged so as not to be trapped between the current collector fabric 11 and the back roll 30.

In FIG. 5, the current collector fabric 11 is shown as being delaminated from the back roll 30, but this is merely for illustrative purposes to indicate an air exhaust path using the arrow. As long as the exhaust guide portion 33 is adopted, the current collector fabric 11 is not delaminated from the back roll 30.

The exhaust guide portion 33 serves to discharge air introduced between the current collector fabric 11 and the back roll 30 to the outside. "Outside" refers to a space that is not covered by the current collector fabric 11. When the exhaust guide portion 33 is adopted, a phenomenon of air being trapped between the back roll 30 and the current collector fabric 11 is eliminated.

The exhaust guide portion 33 includes a plurality of annular grooves 33a and a plurality of depression prevention portions 33b. Each annular groove 33a has a certain width and depth, extends in a circumferential direction of the back roll 30, and guides the introduced air in the circumferential direction, i.e., in the direction indicated by arrow c. Each annular groove 33a is formed in a shape surrounding an outer circumferential surface of the back roll 30, i.e., a ring shape. The plurality of annular grooves 33a is spaced apart from each other at regular intervals.

The depression prevention portions 33b are parts formed between the annular grooves 33a, have the same diameter as the close contact surface portion 31, are in contact with the current collector fabric 11, and prevent the current collector fabric from entering the annular grooves 33a. For example, the depression prevention portions prevent the current collector fabric 11 from concavely entering the annular grooves 33a due to the transfer tension. If the exhaust guide portion 33 does not have the depression prevention portions 33b, a part of the current collector fabric 11 passing through the exhaust guide portion 33 enters the annular grooves 33a due to the transfer tension.

Since the plurality of annular grooves 33a is formed in the exhaust guide portion 33, air introduced between the back roll 30 and the current collector fabric 11 escapes directly in the direction indicated by arrow c, preventing delamination of the current collector fabric 11 from the back roll.

In this case, the width of each depression prevention portion 33b and the width of each annular groove 33a may be formed to be approximately 0.5 mm to 1.5 mm through precision machining, and the depth of each annular groove 33a may be formed to be approximately 0.1 mm to 0.3 mm. In addition, the width of each depression prevention portion 33b and the width of each annular groove 33a may be formed substantially the same. For example, if the width of each depression prevention portion 33b is 1 mm, the width of each annular groove 33a may also be set to 1 mm. If the width of each depression prevention portion is too large, a part of the current collector fabric 11 passing through the exhaust guide portion 33 only slightly enters the annular grooves 33a due to the transfer tension, resulting in an insufficient delamination prevention effect. Conversely, if the width of each depression prevention portion is too small compared to each annular groove, a part of the current collector fabric 11 passing through the exhaust guide portion 33 becomes too large, resulting in an insufficient wrinkle prevention effect.

In this case, the annular grooves 33a may be formed so as to have widths gradually increasing toward the center of the electrode material coating back roll. Accordingly, on the surface of the electrode material coating back roll, the width of each depression prevention portion 33b and the width of each annular groove 33a are formed substantially the same, and at the same time the widths of the annular grooves 33a increase in an inward direction, enabling the current collector fabric to be in closer contact with the back roll due to the orifice effect, thereby preventing delamination of the current collector fabric 11 from the back roll.

Meanwhile, micro-dimples may be formed on the surface of the electrode material coating back roll. The micro-dimples may be formed by laser etching. The width of each micro-dimple may be 1 µm or less. Alternatively, the surface of the electrode material coating back roll may be formed with a surface roughness having recesses of approximately 1 µm, rather than being completely smooth. Accordingly, the micro-dimples may serve as air pockets configured to reduce the friction force between the back roll and the current collector fabric 11.

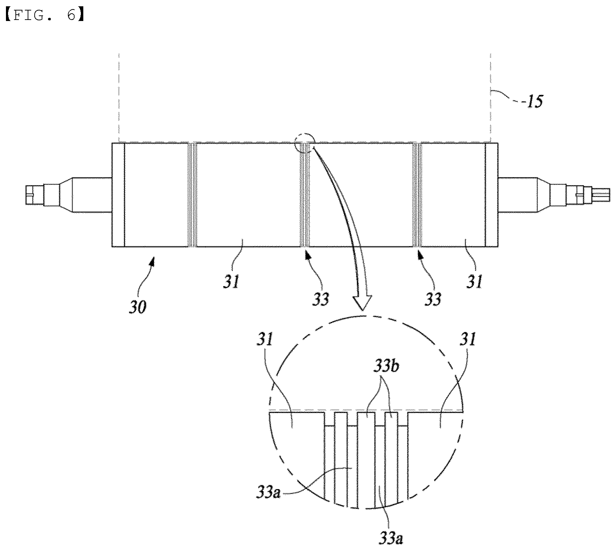

FIG. 6 is a front view showing a modification of the electrode material coating back roll according to the first embodiment of the present invention.

The back roll 30 shown in FIG. 6 has three exhaust guide portions 33. The back roll 30 of FIG. 4 is used to support a current collector fabric 11 with a single uncoated portion formed in the center thereof, whereas the back roll of FIG. 6 may support a current collector fabric with three uncoated portions. Since the exhaust guide portions 33 correspond to the positions of the uncoated portions, the design of the exhaust guide portions 33 varies depending on the widths or positions of the uncoated portions in a produced product.

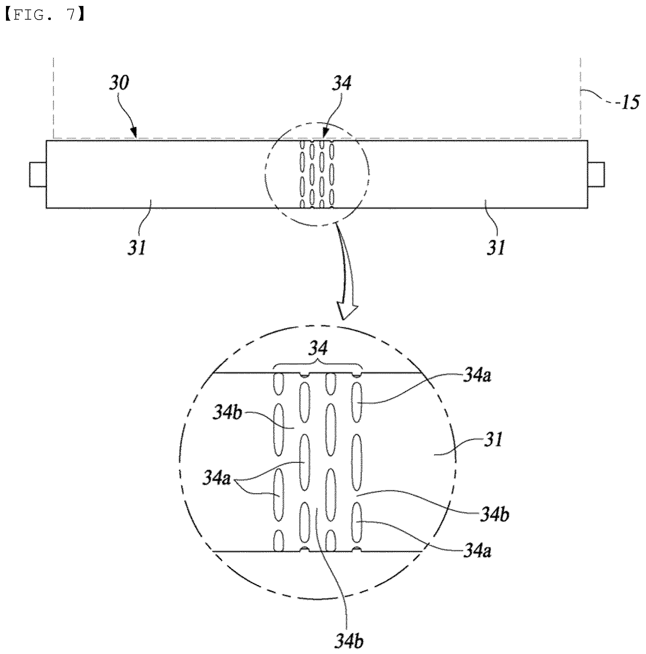

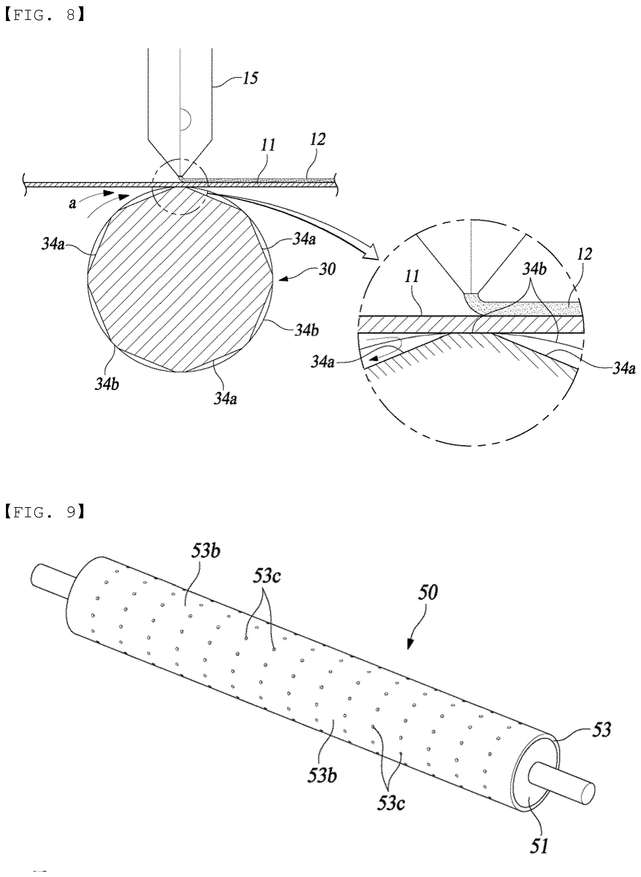

FIG. 7 is a front view showing a modification of the electrode material coating back roll 30 according to the first embodiment of the present invention, and FIG. 8 is a view showing coating of an active material using the back roll of FIG. 7.

Hereinafter, the same reference numerals as described above refer to the same parts having the same functions.

Referring to the figures, it can be seen that an exhaust guide portion 34 is formed at a central part of the back roll 30 in a longitudinal direction and that close contact surface portions 31 are formed on both sides of the exhaust guide portion 34. The function of the exhaust guide portion 34 is the same as that of the annular exhaust guide portion 33 described with reference to FIG. 4. That is, the exhaust guide portion discharges air introduced between the back roll 30 and the current collector fabric 11 while supporting the current collector fabric 11.

The exhaust guide portion 34 corresponds to the uncoated portion of the current collector fabric 11. That is, the exhaust guide portion supports a part of the current collector fabric to which an active material 12 is not to be applied. In contrast, each close contact surface portion 31 corresponds to the coated portion and supports a part to which the active material is to be applied.

The exhaust guide portion 34 includes a plurality of tangential recesses 34a and a depression prevention portion 34b. Each tangential recess 34a is a recess formed such that a bottom surface thereof is parallel to a tangential direction of the outer circumferential surface of the back roll 30. The bottom surface of each tangential recess 34a is spaced apart from the current collector fabric 11, allowing air to pass through a space between the current collector fabric 11 and the bottom surface of each tangential recess.

The width of each tangential recess 34a is the same as the width of each annular groove 33a. In addition, the plurality of tangential recesses 34a is disposed spaced apart from each other in a circumferential direction and an axial direction of the back roll 30.

The depression prevention portion 34b is a curved portion provided between the tangential recesses 34a. The depression prevention portion 34b has the same diameter as the close contact surface portion 31 and prevents the current collector fabric 11 from concavely entering the tangential recesses 34a due to the transfer tension during transfer thereof.

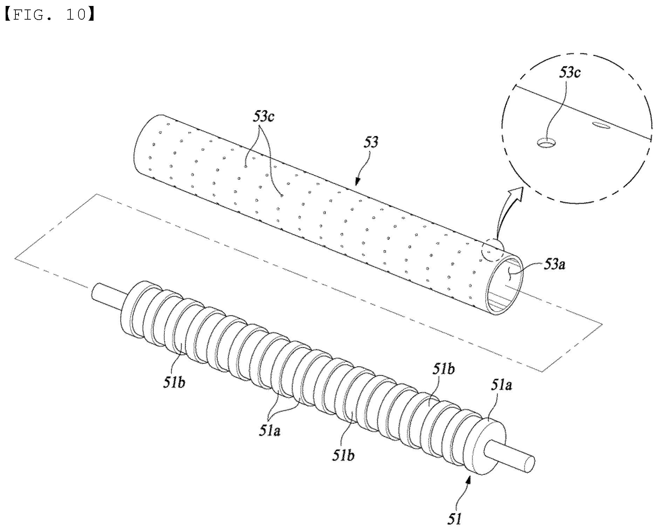

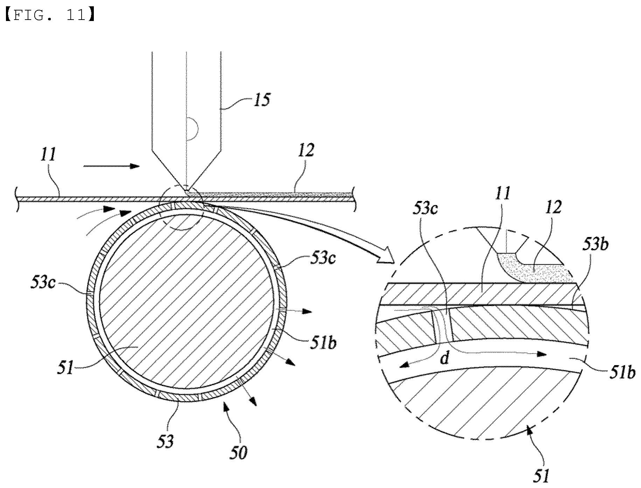

FIG. 9 is a perspective view of an electrode material coating back roll 50 according to a second embodiment of the present invention, and FIG. 10 is an exploded perspective view of the back roll of FIG. 9. In addition, FIG. 11 is a side sectional view illustrating the function of the back roll shown in FIG. 9.

As shown, the electrode material coating back roll 50 according to the second embodiment includes a roll core 51 and a porous cylinder 53. The back roll 50 according to the second embodiment also serves to support the current collector fabric 11 during the coating process in which the coating device, i.e., the slot die, coats the current collector fabric 11 with the active material 12.

The roll core 51 is a roll member of a certain diameter, with a plurality of cylinder close contact portions 51a and a plurality of air guide grooves 51b formed on an outer circumferential surface thereof. Each cylinder close contact portion 51a is a ring-shaped protrusion extending in a circumferential direction of the roll core 51 and is fixed to an inner circumferential surface of the porous cylinder 53 in close contact therewith. As long as the porous cylinder 53 supports the cylinder close contact portion 51a, the diameter of the porous cylinder 53 does not change (due to external force).

The air guide grooves 51b are empty spaces provided between the cylinder close contact portions 51a. As shown in FIG. 11, each air guide groove 51b is a passageway that guides air introduced through fine through-holes 53c in a direction indicated by arrow d. The width or depth of each air guide groove 51b may be varied.

The porous cylinder 53 is a cylindrical member of a certain diameter configured to receive the roll core 51 in a core receiving space 53a. As described above, the inner circumferential surface of the porous cylinder 53 is fixed to the cylinder close contact portion 51a of the roll core 51 in close contact therewith. The core receiving space 53a is a space that receives the roll core 51.

In addition, the porous cylinder 53 is provided with a plurality of fine through-holes 53c. The fine through-holes 53c are through-holes having an inner diameter of 1 mm or less, and are disposed so as to correspond to the air guide grooves 51b. Therefore, air that has passed through the fine through-holes 53c is introduced into air guide grooves 51b. In addition, the air introduced into the air guide grooves 51b is discharged to the outside through the fine through-holes 53c.

A part of the porous cylinder 53 where the fine through-holes 53c are not formed is a close contact surface portion 53b. The close contact surface portion 53b is a curved surface of a certain diameter that is in surface contact with the current collector fabric 11.

The fine through-holes 53c have an inner diameter of 1 mm or less, whereby the fine through-holes may correspond to the entire surface of the current collector fabric 11. That is, the fine through-holes are located not only in an uncoated portion region where the active material 12 is not to be applied but also in a coated portion region where the active material is to be applied. However, the fine through-holes 53c may also be formed only in the uncoated portion region, as in the first embodiment. That is, the fine through-holes may be formed only in a part of the current collector fabric 11 where the active material is not to be applied.

As a result, each of the coating rolls 30 and 50 according to the first and second embodiments configured as described above directly discharges air introduced between the current collector fabric 11 and the coating roll during application of the active material 12 to the current collector fabric 11, thereby preventing delamination and thus avoiding the occurrence of wrinkles and coating defects.

The present invention has been described in detail through specific embodiments, but the present invention is not limited to the above embodiments and may be modified in various forms by those skilled in the art within the scope of the technical concept of the present invention.

### [Industrial Applicability]

The present invention is applicable to the secondary battery electrode material coating industry.

## Claims

1. An electrode material coating back roll having an inflow air discharge function, the electrode material coating back roll being disposed so as to correspond to an active material coating device for manufacturing secondary batteries, the electrode material coating back roll being configured to support a current collector fabric while the coating device coats the current collector fabric with an active material, the electrode material coating back roll comprising:
a close contact surface portion in close contact with the current collector fabric; and
an exhaust guide portion integrated with the close contact surface portion, the exhaust guide portion being configured to discharge air introduced between the back roll and the current collector fabric to an outside, thereby preventing delamination of the current collector fabric from the back roll due to the introduced air.

2. The electrode material coating back roll according to claim 1, wherein
the current collector fabric comprises a coated portion where the active material is coated and an uncoated portion where the active material is not coated, and
the exhaust guide portion is located so as to correspond to the uncoated portion.

3. The electrode material coating back roll according to claim 1 or 2, wherein the exhaust guide portion comprises an annular groove having a certain width and depth, the annular groove extending in a circumferential direction of the back roll, the annular groove being configured to guide the introduced air in the circumferential direction.

4. The electrode material coating back roll according to claim 3, wherein
the annular groove is provided in plural so as to be parallel to each other, and
a depression prevention portion is provided between the annular grooves, the depression prevention portion having the same diameter as the close contact surface portion, the depression prevention portion being in contact with the current collector fabric, the depression prevention portion being configured to prevent the current collector fabric from entering the annular grooves.

5. The electrode material coating back roll according to claim 4, wherein
a width of each of the annular grooves and the depression prevention portion is 0.5 mm to 1.5 mm, and
a depth of each of the annular grooves is 0.1 mm to 0.3 mm.

6. The electrode material coating back roll according to claim 5, wherein the annular grooves are formed so as to have widths gradually increasing from a surface to a center of the back roll.

7. The electrode material coating back roll according to claim 1 or 2, wherein the exhaust guide portion comprises a plurality of tangential recesses formed parallel to a tangential direction of the back roll, the tangential recesses being configured to guide and exhaust the introduced air in the tangential direction.

8. The electrode material coating back roll according to claim 6, wherein
the tangential recesses are spaced apart from each other in a rotational axis direction and the circumferential direction of the back roll, and
a depression prevention portion is formed between the tangential recesses, the depression prevention portion being in contact with the current collector fabric, the depression prevention portion being configured to prevent the current collector fabric from entering the tangential recesses.

9. An electrode material coating back roll having an inflow air discharge function, the electrode material coating back roll being disposed so as to correspond to an active material coating device for manufacturing secondary batteries, the electrode material coating back roll being configured to support a current collector fabric while the coating device coats the current collector fabric with an active material, the electrode material coating back roll comprising:
a roll core provided in an outer circumferential surface thereof with an air guide groove, the roll core having a certain diameter; and
a porous cylinder formed as a cylindrical member of a certain diameter configured to receive the roll core, the porous cylinder being in close contact with the current collector fabric, the porous cylinder having a plurality of fine holes configured to allow air introduced between the current collector fabric and the back roll to pass therethrough and to guide the air to the air guide groove.

10. The electrode material coating back roll according to claim 9, wherein
the roll core is provided on an outer circumferential surface thereof with a plurality of cylinder close contact portions extending in a circumferential direction of the roll core, the cylinder close contact portions being fixed to an inner circumferential surface of the porous cylinder in close contact therewith,
the air guide groove is a space provided between the cylinder close contact portions, and
the fine holes are disposed so as to correspond to the air guide groove.
